# EUROPEAN PATENT APPLICATION

(11) **EP 1 403 298 A1**
(43) Date of publication of application: **31.03.2004**
(21) Application number: 02078969.9
(22) Date of filing: 24.09.2002
(51) Int. Cl.: C08F 299/04, C08F 283/01

(54) **Hardenable unsaturated polyester compositions with low styrene content**

(71) Applicant: Resolution Research Nederland B.V., 3196 KK Vondelingenplaat RT (NL)
(72) Inventor: The designation of the inventor has not yet been filed
(74) Representative: van der Straaten, Jan Anthony

(57) **Abstract**

The invention relates to hardenable unsaturated polyester (UP) compositions. More in particular, the invention relates to hardenable compositions comprising unsaturated polyester and at least one additional monomer, in which the polyester can sufficiently dissolve, and which can be hardened at either room temperature or at higher temperature with the appropriate initiator. Said composition comprises:
(a) an ethylenically unsaturated polyester, obtainable by condensation of
   (a,i) an aliphatic mono alcohol, diol or polyol or mixtures thereof;
   (a,ii) an unsaturated aliphatic mono acid, dibasic acid, optionally mixed with a cycloaliphatic or aromatic dibasic acid; and optionally
   (a,iii) a glycidyl ester of α,α-branched alkane carboxylic acids containing from 5 to 14 carbon atoms in the acid moiety;
   (a,iv) 0 to 60 wt percent relative to the weight of the polyester without monomer, of dicycloalkanediene having from 10 to 16 carbon atoms.
(b) a monomer selected from a
   (b,i,) a vinyl ester of an α,α-branched alkane carboxylic acid, containing from 8 to 14 carbon atoms in the acid moiety in the range 10 to 85 wt percent
   (b,ii,) a vinyl ester of an aromatic acid containing 7 to 12 carbon atoms in the acid moiety, the component (b) being optionally mixed with a monoalkyl(meth)acrylate or poly alkyl(meth)acrylate comonomer, wherein the alkyl residue contains 1-10 carbon atoms in the range 10 to 60 wt percent,
   (b,iii,) a vinyl aromatic monomer in the range 5 to 80 wt percent,
(c) a curing catalyst.
And shaped articles derived from said compositions.

## Description

The invention relates to hardenable unsaturated polyester (UP) compositions.

More in particular, the invention relates to hardenable compositions comprising an unsaturated polyester and at least one monomer, in which the polyester can sufficiently dissolve, and which harden at either room temperature or at higher temperature with an appropriate initiator.

It is generally known that until now most of the presently used unsaturated polyester resins are dissolved in styrene or other vinyl aromatic monomers such as vinyl toluene and divinylbenzene

Disadvantages involved in said industrial scale processing of unsaturated polyesters are the emission of styrene monomer from the relatively volatile system during processing, and the strong smoke development upon combustion of the hardened polyesters.

Due to the pressure of health and/or environmental organisations, there has developed a strong aim to replace styrene and structurally related monomers having a lower vapour pressure and offering a good solubility of the starting unsaturated polyester resins.

Although hardenable compositions, based on an unsaturated polyester and one or more vinyl esters of α,α-branched carboxvlic acids. optionally mixed with other

Moreover in said EP 0030050 B1, page 2, lines 49-58, it was also clearly disclosed that the vinyl ester monomers having a boiling point of at least 150°C and copolymerizable with the polyester, and selected from vinyl caproate, vinyl laurate, vinyl pivalate, vinyl benzoate, vinyl chloroacetate and vinyl Versatate could be mixed with other monomers and interalia styrene and divinyl styrene in amounts of up to 50 % by weight relative to the weight of all monomers.

A process for making DCPD (dicyclopentadiene) based unsaturated polyesters was also known from e.g. US 4,4148,765, US 4,348,499, and US 5,777,065 disclosing ways to incorporate DCPD in unsaturated polyesters.

As result of extensive research and experimentation it has now surprisingly found that the more and more objected evaporation of vinyl aromatic monomers during curing could be significantly reduced , in the UP composition of the present invention, whereas the cured product thereof simultaneously appears to provide attractive properties. Vinyl aromatic monomers were found to have a strong inhibiting effect on the reaction rate of vinyl esters of α,α-branched carboxylic acids in the monomer mixture, wherein the unsaturated polyester can be dissolved in an acceptable degree. The addition of some methylacrylate co-monomer was found to solve their problem.

Accordingly, the present invention relates to hardenable unsaturated polyester composition comprising
(a) an ethylenically unsaturated polyester, obtainable by condensation of
   (a,i) an aliphatic mono alcohol, diol or polyol or mixtures thereof;
   (a,ii) an unsaturated aliphatic mono acid, dibasic acid, optionally mixed with a cycloaliphatic or aromatic dibasic acid; and optionally
   (a,iii) a glycidyl ester of α,α-branched alkane carboxylic acids containing from 5 to 14 carbon atoms in the acid moiety;optionally
   (a,iv) 0 to 60 wt percent relative to the weight of the polyester without monomers of dicycloalkanediene having from 10 to 16 carbon atoms.
(b) a monomer selected from a
   (b,i,) a vinyl ester of an α,α-branched alkane carboxylic acid, containing from 8 to 14 carbon atoms in the acid moiety, in the range of from 10 to 85 wt percent
   (b,ii,) a vinyl ester of an aromatic acid containing 7 to 12 carbon atoms in the acid moiety, in the range of from 10 to 60 wt percent
   (b,iii,) a vinyl aromatic monomer in the range of from 5 to 80 wt percent
   the weight percentages of (b,i), (b,ii) and (b,iii) being relative to the weight of total component (b)
   the component (b) being optionally mixed with a monoalkyl(meth)acrylate or poly alkyl(meth)acrylate comonomer, wherein the alkyl residue contains 1-10 carbon atoms,
   wherein the components (a) and (b) occur in a mutual weight ratio of (a) and (b) in the range of from 40/60 to 70/30, relative to the weight of components (a) and (b), and
(c) a curing catalyst optionally accompanied by (d) an accelerator and (e) a co-accelerator.

With the term "any vinyl aromatic compound" as used throughout the specification is meant styrene and/or structurally related compounds such as vinyl toluene, α-methyl styrene, chlorostyrene, dichlorostyrene, vinyl naphtalene and the like.

As suitable vinyl esters component (b,i) can be used those which are commercially available under the trademark VEOVA (ex. RESOLUTION Performance Products) and EXXAR (ex. EXXON Chemical Company Inc.)..
More preferably vinyl esters are used containing 9 to 13 carbon atoms in the acid moiety. According to a more preferred embodiment of the applied vinyl ester have been derived from α,α-branched alkane carboxylic acids mixture containing predominantly 11 and 12 carbon atoms.

Preferred components (b,ii) are benzoates such as vinyl benzoate or vinyl tert butyl benzoate

As suitable glycidyl esters of α,α-branched alkane carboxylic acids (a,iii) can be used those which are commercially available under the trademark CARDURA (ex. RESOLUTION Performance Products) and GLYDEXX (ex. EXXON Chemical Company Inc.) or those which are obtainable by processes known from WO 0156966 A1 and an European co-pending application 01202901.3.

According to a preferred embodiment, the unsaturated polyester has been prepared from :
(a,i) glycol, such as ethylene glycol, diethylene glycol, propylene glycol, butane diol, neopentyl glycol, 4,4'-isopropylene biscyclohexanol, trimethylolpropane of which ethylene glycol and propylene glycol are preferred;
(a,ii) maleic acid anhydride, fumaric acid or itaconic acid and preferably maleic acid anhydride optionally mixed with a minor amount (<20 wt%) of phtalic anhydride, isophtalic acid, terephtalic acid, malonic acid, oxalic acid, adipic acid, sebacic acid, succinic acid, azelaic acid, glutaric acid, hexahydrophtalic acid, hexahydroterephtalic acid, hexahydroisophtalic acid, dihydrophtalic acid, dihydroterephtalic acid, dihydroisophtalic acid, of which phtalic anhydride is preferred, and optionally
(a,iii) glycidyl esters of α,α-branched alkane carboxylic acid containing 9-12 carbon atoms in the acid moiety.

According to a preferred embodiment of the compositions of the present invention, the vinyl ester component (b) comprises a vinyl ester of α,α-branched alkane carboxylic acid containing from 9 to 13 carbon atoms in the acid moiety, mixed with multifunctional (meth)acrylate and vinyl aromatic comonomers and more preferably di or trifunctional (meth)acrylate comonomers. More preferably said comonomers are used in a weight ratio (vinyl ester / (meth) acrylate/ vinyl aromatic) of from 20/20/60 to 40/40/20.

According to another preferred embodiment of the compositions of the present invention as component (a,iv) is used a dicycloalkanediene having from 10 to 14 carbon atoms in an amount of from 10 to50 weight % relative to the weight of total UP composition. More in particular norbomadienes are used. Most preferably dicyclopendadiene is used, and the proportion of dicyclopendadiene is in the range of from 15 to 50 wt %, relative to the weight of the complete of the UP composition.

Curing catalyst are in general selected from commercially available azo or peroxide compounds.

Preferred curing catalysts (component c) are selected from di-tert-butyl peroxide, di-tert-amyl peroxide, tert-butyl perbenzoate, tert-butyl peroctoate, benzoyl peroxide, dicumyl peroxide, peroxy dicarbonate or dialkyl ketone peroxides such as methyl ethyl ketone peroxide or methyl isobutyl ketone peroxide or mixtures of said dialkyl ketone peroxydes .

They are normally used in amounts of from 0.3 to 3 parts by weight per 100 parts by weight of unsaturated polyester resin and can optionally be combined with an accelerator and a co-accelerator if faster curing rate is required at a given temperature.

More preferably di(alkyl)ketone peroxide derivatives are used.

A preferred mutual weight ratio between the components (a) and (b) is in the range from 50/50 to 75/25 and more preferably used.

Another aspect of the present invention is formed by a process for the cold hardening of the composition, comprising
(a) an ethylenically unsaturated polyester, obtainable by condensation of
   (a,i) an aliphatic mono alcohol, diol or polyol or mixtures thereof;
   (a,ii) an unsaturated aliphatic mono acid, dibasic acid, optionally mixed with a cycloaliphatic or aromatic dibasic acid; and optionally
   (a,iii) a glycidyl ester of α,α-branched alkane carboxylic acids containing from 5 to 14 carbon atoms in the acid moiety;
   (a,iv) 0 to 60 wt percent relative to the weight of the polyester without monomers of dicycloalkanediene having from 10 to 16 carbon atoms.
(b) a monomer selected from (b,i) a vinyl ester of an α,α-branched alkane carboxylic acid, containing from 8 to 14 carbon atoms in the acid moiety,
   (b,ii) a vinyl ester of an aromatic acid containing 7 to 12 carbon atoms in the acid moiety,
      the component (b) optionally mixed with a vinyl aromatic or monoacrylate or polyacrylate comonomer, the weight percentages of (b,i), (b,ii) and (b,iii) being relative to the weight of total component (b)
   wherein the components (a) and (b) occur in a mutual weight ratio of (a) and (b) in the range of from 55/45 to 70/30, relative to the weight of components (a) and (b), and
(c) a curing catalyst selected from azo compounds or organic peroxides and optionally (d) accelerator and (e) co-accelerator.
   Still another aspect of the present invention is formed by hardened, shaped, articles obtainable by hardening a hereinbefore specified composition, optionally mixed with one or more auxiliaries, such as low shrink agents and fillers.
   Still another aspect of the present invention is formed by shaped articles obtained by pultrusion, optionally mixed with one or more auxiliaries, such as low shrink agents and fillers.

Still another aspect of the present invention is formed by gelcoats made by hardening the herein before specified compositions, optionally mixed with one or more auxiliaries, such as low shrink agents and fillers.

More in particular said hardened shaped articles have been derived from a starting composition comprises glass powder, aluminium hydroxide, calcium carbonate or barium sulfate.

Also, more in particular, said hardened shaped articles have been derived from a starting composition comprising, a low shrink agents selected from lower alkyl esters of acrylic acid or methacrylic acids, cellulose acetate butyrate, cellulose acetate propionate, polyethylene, polypropylene, saturated polyester.

It will be appreciated that the hardenable compositions according to the present invention show after hardening attractive mechanical properties such as modulus, impact strength, without having the disadvantage of the significantly larger monomer emissions.

The invention is illustrated by the following examples, however without restricting its scope to these specific embodiments.

For the evaluation of the properties of the (UP) compositions of the present invention, the following test methods were used.

### Sample preparation for impact test and flexural properties:

The polyester mixture were poured in a 4mm thick casting and cured in a ventilated oven for 60 minutes at 130°C. The samples were then cooled and cut in pieces according to the ISO methods used for the impact strength and flexural properties measurement. They were then put in a ventilated oven for 60 minutes at 100°C. Finally they were conditioned for one night at 23°C and relative humidity of 50%.

### Determination of flexural properties

Flexural properties were determined according to the standard method ISO 178:1993(E) with the following characteristics:

| | |
|---|---|
| Span length | 64 mm |
| Test speed | 2 mm/min |
| Temperature | 23 °C |
| Humidity | 50 % |

### Gel time measurements

To measure the geltime at ambient temperature of the castings (Example 2), vanadylacetylacetonate was used as accelerator, acetylacetone as co-accelerator and methylethylketone peroxide as initiator. A solution was made of 1.25 g of vanadylacetylacetonate and 25 g of acetylacetone dissolved in 25 ml of dimethylphthalate.

In a glass bottle, 25 g of the polyester (Example 2) was put together with 1ml of the solution VAA/AA/DMP and with 1 ml of MEK peroxide. The chrono was started at that moment. This mixture was mixed on the rollerbank for 2 min and then the solution was poured into a metal cup put in an EPC box (for isolation). A thermocouple was put in the solution and the temperature and the time were monitored till the solution start to gel (Geltime).

### Examples

### Example 1-tmk6

A glass reaction flask was equipped with a stirrer, a heating system, a reflux condenser and a nitrogen inlet. This reactor was charged with 1 mol of maleic anhydride, 0.5 mol of dicyclopentadiene (purity 90%), 0.65 mol of neopentylglycol, 1.1 mol of deionized water and with 0.02 wt% of hydroquinone. The resultant mixture was heated at 95°C for 20 minutes and then at 130°C for 1.5 hours under nitrogen flow to form an adduct of dicyclopentadiene and maleic acid (till an acid number of 230 mgKOH/g). To this adduct, 0.3 mol of neopentylglycol was added and the mixture was heated at 130°C under reflux for 30 minutes. Then the temperature was increased and the mixture underwent dehydration condensation reaction at 200°C under nitrogen flow for 11 hours till an acid number of 20 mgKOH/g.

This polyester was blended in a weight ratio 61/13/13/13 with respectively VeoVa1 0/Styrene/EGDMA

### Example 2 tmk27

A glass reaction flask was equipped with a stirrer, a heating system, a reflux condenser and a nitrogen inlet. This reactor was charged with 0.281 mol of butyl-ethyl-propanediol, 0.843 mol of neopentylglycol. The resultant mixture was heated to melt. When the mixture is melted, 0.4 mol of isophthalic acid and 0.001 wt% of hydroquinone was added and the mixture underwent dehydration condensation reaction at maximum 200°C under nitrogen flow for 4.5 hours till an acid number of 30 mgKOH/g. Then the mixture was cooled down to 130°C and 0.6 mol of maleic anhydride was added and again the mixture underwent dehydration condensation reaction at maximum 200°C under nitrogen flow for 7.5 hours till an acid number of 15 mgKOH/g.

This polyester was blended in a weight ratio 55/15/15/15 with respectively VeoVa10/Styrene/EGDMA.

### Example 3

The polyester example 2 was blended in a weight ratio 55/22.5/22.5 with respectively VeoVa10/Styrene.

### Example 4

The polyester example 2 was blended in a weight ratio 55/25/20 with respectively VeoVa10/EGDMA.

### Results

| Example | M% | Monomers | Viscosity (mPa.s) | Flex.Str. (MPa) | Flex. Mod.(MPa) | Strain % |
|---|---|---|---|---|---|---|
| 1 | 13/13/13 | VV10/Sty/EG DMA | 440 | 52 | 2170 | 2.6 |
| 2 | **15/15/15** | **VV10/Sty/EG DMA** | **609** | **86.7** | **3122** | **2.55** |
| 3 | 22.5/22.5 | VV10/Sty | 378 | 42.9 | 690 | 0.7 |
| 4 | 25/20 | VV10/EGDM A | 969 | 62.12 | 2528 | 2.6 |

### Gel time results

| Example 2 Dissolved with | M% | Peak temperature | Gel Time | Casting |
|---|---|---|---|---|
| VV10/STY | 22.5/22.5 | 75°C | 27 min | Still soft |
| VV10/STY/EGDMA | 15/15/15 | 123°C | 25 min | Hard |

## Claims

1. A hardenable unsaturated polyester composition comprising
(a) an ethylenically unsaturated polyester, obtainable by condensation of
(a,i) an aliphatic mono alcohol, diol or polyol or mixtures thereof;
(a,ii) an unsaturated aliphatic mono acid, dibasic acid, optionally mixed with a cycloaliphatic or aromatic dibasic acid; and optionally
(a,iii) a glycidyl ester of α,α-branched alkane carboxylic acids containing from 5 to 14 carbon atoms in the acid moiety;
(a,iv) 0 to 60 wt percent relative to the weight of the polyester without monomer, of dicycloalkanediene having from 10 to 16 carbon atoms.
(b) a monomer selected from a
(b,i,) a vinyl ester of an α,α-branched alkane carboxylic acid, containing from 8 to 14 carbon atoms in the acid moiety in the range 10 to 85 wt percent
(b,ii,) a vinyl ester of an aromatic acid containing 7 to 12 carbon atoms in the acid moiety, the component (b) being optionally mixed with a monoalkyl(meth)acrylate or poly alkyl(meth)acrylate comonomer, wherein the alkyl residue contains 1-10 carbon atoms in the range 10 to 60 wt percent,
(b,iii,) a vinyl aromatic monomer in the range 5 to 80 wt percent, the weight percentages of (b,i), (b,ii) and (b,iii) being relative to the weight of total component (b)
wherein the components (a) and (b) occur in a mutual weight ratio of (a) and (b) in the range of from 40/60 to 70/30, relative to the weight of components (a) and (b), and
(c) a curing catalyst, optionally accompanied by (d) an accelerator and (e) a co-accelerator.

2. A hardenable unsaturated polyester according to claim 1, **characterised in that** it as been prepared from:
(a,i) glycol, such as ethylene glycol, diethylene glycol, propylene glycol, butane diol, neopentyl glycol, 4,4'-isopropylene biscyclohexanol, trimethylolpropane
(a,ii) maleic acid anhydride, fumaric acid or itaconic acid and preferably maleic acid anhydride optionally mixed with a minor amount (<20 wt%) of phtalic anhydride, isophtalic acid, terephtalic acid, malonic acid, oxalic acid, adipic acid, sebacic acid, succinic acid, azelaic acid, glutaric acid, hexahydrophtalic acid, hexahydroterephtalic acid, hexahydroisophtalic acid, dihydrophtalic acid, dihydroterephtalic acid, dihydroisophtalic acid, , and optionally
(a,iii) glycidyl esters of α,α-branched alkane carboxylic acid containing 9-12 carbon atoms in the acid moiety.

3. A composition according to claim 2 wherein (a,i) is neopentyl glycol and propylene glycol.

4. A composition according to claim 2 wherein (a,ii) is phtalic anhydride.

5. A composition according to claim 2 wherein (a,iii) is a glycidylester of α,α branched alkane carboxylic acid containing 10 carbon atoms in the acid moiety.

6. A composition according to claims 1-5 **characterised in that** component (b) comprises a vinyl ester of α,α-branched alkane carboxylic acid containing from 9 to 13 carbon atoms in the acid moiety, mixed with multifunctional (meth)acrylate comonomers and more preferably di or trifunctional (meth)acrylate comonomers and vinyl aromatic in a weight ratio (vinyl ester / (meth) acrylate/vinyl aromatic) of from 20/20/60 to 40/40/20.

7. A composition according to claims 1-4 **characterised in that** component (b) comprises vinyl benzoate.

8. Hardened, shaped, articles obtainable by hardening a composition according to claims 1-6, optionally mixed with one or more auxiliaries, such as low shrink agents and fillers.

9. Gelcoats made by hardening the compositions according to claims 1 to 6, optionally mixed with one or more auxiliaries, such as low shrink agents and fillers.

10. Shaped articles according to claim 8 comprising a low shrink agent selected from lower alkyl esters of acrylic acid or methacrylic acids, cellulose acetate butylate, cellulose acetate propionate, polyethylene, polypropylene, saturated polyester.
